# EUROPÄISCHE PATENTSCHRIFT

(11) **EP 2 330 005 B1**
(45) Veröffentlichungstag und Bekanntmachung des Hinweises auf die Patenterteilung: **09.11.2011**
(21) Anmeldenummer: 10192329.0
(22) Anmeldetag: 24.11.2010
(51) Int. Cl.: B60T 11/16, B60T 11/232, B60T 11/236, F15B 7/08, F15B 7/10, F15B 15/14, F15B 21/04, F16D 25/08, F16D 25/12

(54) **Hydraulikzylinder**
Hydraulic cylinder
Cylindre hydraulique

(30) Priorität: 30.11.2009 DE 102009047281
(43) Veröffentlichungstag der Anmeldung: 08.06.2011
(73) Patentinhaber: ZF Friedrichshafen AG, 88038 Friedrichshafen (DE)
(72) Erfinder: Gebauer, Dieter, 97502, Euerbach (DE)

(56) Entgegenhaltungen:
- EP-A1- 1 602 543
- DE-A1- 10 028 673
- DE-A1- 19 953 286
- US-A1- 2003 010 028

## Beschreibung

Die Erfindung betrifft einen Hydraulikzylinder, insbesondere einen Geberzylinder, gemäß dem Oberbegriff des Patentanspruchs 1.

Ein solcher Hydraulikzylinder, wie dieser bei hydraulischen Kupplungs- oder Bremsbetätigungssystemen in Kraftfahrzeugen Anwendung findet, ist z.B. aus der DE 100 28 673 A1 bekannt.

Das Gehäuse des dort dargestellten Hydraulikzylinders weist an dessen Stirnseite einen Anschluss für eine Druckleitung und an dessen Mantelfläche einen Anschluss mit einem darin verlaufenden Nachlaufkanal zur Verbindung mit einem Nachlaufbehälter auf. An der dem Druckraum zugewandten Stirnseite des Zylinderkolbens ist eine separate, ringförmige Nachlaufeinrichtung angeordnet, an deren Außen- als auch an deren Innenumfangsfläche jeweils zwölf, axiale Nachlaufnuten (Schnüffelnuten) gleichmäßig verteilt sind, die gemeinsam mit dem Nachlaufkanal, einem Nachlaufbereich und einer im Zylinder angeordneten Primärdichtung zusammenwirken.

Wenn sich der Kolben in seiner ausgefahrenen Endstellung befindet, bei welcher der Druckraum sein maximales Volumen einnimmt, überbrücken die Nachlaufnuten die in dem Gehäuse befestigte und an dem Kolben anliegende Dichtung. Somit kann einerseits Hydraulikfluid aus dem Nachlaufbehälter in den Druckraum nachströmen und andererseits können in der Entlüftungsnut angesammelte Gasblasen durch den Nachlaufkanal entweichen. Wird der Kolben in Richtung des Druckraumes verlagert, so wird, solange die Fluidverbindung über die Nachlaufnuten geöffnet ist, aus dem Druckraum verdrängtes Fluid wieder in den Nachlaufkanal gefördert, wobei auch noch im Druckraum befindliche Gasblasen entweichen können. Hierdurch wird der Druckraum des Hydraulikzylinders bei jedem Hub selbständig entlüftet.

Zur Verbesserung des Entlüftungsverhaltens wurde in der DE 199 53 286 A1 ein Hydraulikzylinder mit am Kolben angeordneten Nachlaufnuten und einer am Zylindergehäuse längs innerhalb des Duckraumes ausgebildeten Entlüftungsnut vorgeschlagen, deren Nutgrund gegenüber einer Horizontalen der vorgesehenen Einbaulage des Zylinders zu dem Entlüftungs- oder Nachlaufkanal hin ansteigend gestaltet ist. Durch diese Gestaltung können sich im Druckraum befindliche Gasblasen in der geodätisch am höchsten angeordneten Entlüftungsnut sammeln und aus dem Bereich nahe der Endstellung des Kolbens einfach über den Entlüftungs- oder Nachlaufkanal abgeführt werden.

Bei den genannten Hydraulikzylindern ist nachteilig, dass trotz der Mehrzahl von Nachlaufnuten eine Entlüftung des Druckraums bei dem meist horizontal erfolgenden Einbau dennoch nur unzureichend ist. Dies führt dazu, dass ein Teil der in der Entlüftungsnut angesammelten Gase in dem Druckraum verbleibt und bei einer Betätigung des Kolbens unter einer Verkleinerung des Druckraums die verbleibenden Gasblasen komprimiert werden und somit einen unerwünscht großen Leerweg und eine Totzeit in das hydraulische Betätigungssystem einbringen.

Ein demgegenüber verbessertes Entlüftungsverhalten zeigt ein in der EP 1 602 543 B1 beschriebener gattungsgemäßer Druckmittelzylinder, bei dem die Nachlaufmittel am Kolben im Wesentlichen im Bereich eines im Druckraum befindlichen Gassammelabschnitts ausgebildet und drehfest zu diesem angeordnet sind. Durch diese Maßnahme wird das durch den Kolben verdrängte Fluid bei geeigneter Dimensionierung der Nachlaufmittel gezwungen, den Druckraum hauptsächlich im Bereich des Gassammelabschnitts zu verlassen. Dadurch können sich der Fluid- und der Gasdruck innerhalb des Druckraumes kurzzeitig stark erhöhen, was gleichzeitig zu einem beträchtlichen Anstieg der Ausströmgeschwindigkeit von Gas und Fluid führt, wodurch Gase aus dem Druckraum effektiv ausgepresst und aus diesem entfernt werden können. Obgleich ein solcher Druckmittelzylinder Betriebsvorteile aufweist, kann es beim Befüllen eines hydraulischen Systems unter Anlegung eines Unterdrucks vorkommen, dass sich durch den relativ geringen Querschnitt der als Nuten oder Bohrungen ausgeführten Nachlaufmittel ein Staudruck bildet, welcher eine Verformung der Primärdichtung in die Nachlaufmittel hinein zur Folge hat. Dadurch kann der Ausgleichskanal zwischen dem Druckraum und der Umgebung zumindest teilweise verschlossen und die Befüllung behindert werden.

Der Erfindung liegt von dem genannten Stand der Technik ausgehend, die Aufgabe zugrunde, einen Hydraulikzylinder der eingangs genannten Art so zu gestalten, dass sowohl eine zuverlässige Entgasung des Druckraums als auch eine schnelle Befüllbarkeit eines hydraulischen Systems mit einem solchen Hydraulikzylinder ermöglicht werden.

Diese Aufgabe wird bei einem gattungsgemäßen Hydraulikzylinder mit den kennzeichnenden Merkmalen des Patentanspruchs 1 gelöst.

Erfindungsgemäß wird somit bei einem Hydraulikzylinder der eingangs genannten Art vorgeschlagen, erste Nachlaufmittel am Kolben im Wesentlichen im Bereich eines im Druckraum befindlichen Gassammelabschnitts auszubilden und drehfest zu diesem anzuordnen und des Weiteren am Kolben zweite Nachlaufmittel vorzusehen, welche gegenüber den ersten Nachlaufmitteln axial in Richtung des Druckraums versetzt angeordnet sind.

Die dazu erforderliche Verdrehsicherung des Kolbens kann bspw. durch eine Führungsnut im Gehäuse und eine in diese eingreifende Nase am Kolben oder ähnliche Maßnahmen realisiert werden. Wenn sowohl die ersten als auch die zweiten Nachlaufmittel als Axialnuten ausgebildet werden, so erstrecken sich die im Wesentlichen im Bereich des im Druckraum befindlichen Gassammelabschnitts ausgebildeten ersten Nachlaufmittel axial weiter in Richtung eines kolbenstangenseitigen Endes des Kolbens als weitere vorgesehene Nuten, welche zweite Nachlaufmittel darstellen. Diese zweiten Nachlaufnuten oder -ausnehmungen können generell ebenso im Bereich der ersten Nachlaufnuten ausgebildet und/oder am Kolbenumfang verteilt sein.

Beide Nachlaufmittel sind so am Kolben angeordnet, dass diese in der ausgefahrenen Endstellung des Kolbens die Primärdichtung überbrücken und sowohl über die ersten als auch die zweiten Nachlaufmittel Fluid zur Erst- oder Nachbefüllung aus einem Vorratsbehälter in den Druckraum bzw. in ein hydraulisches System eingebracht werden kann. Durch den gleichzeitigen Fluidtransport mittels der ersten und zweiten Nachlaufmittel ist insbesondere bei einem evakuierten Druckraum eine schnelle Befüllung möglich ohne dass sich dabei die Primärdichtung verschließend an die Nachlaufmittel anlegt. Bei Einfahren des Kolbens zum Druckaufbau werden durch die gestaffelte axiale Anordnung der Nachlaufmittel zunächst die axial kürzer ausgebildeten bzw. axial näher am druckraumseitigen Kolbenende liegenden Nachlaufmittel vollständig in den Druckraum verlagert und somit die entsprechenden Teilkanäle verschlossen. In dieser Kolbenstellung stellen nun lediglich noch die ersten Nachlaufmittel, d.h. die sich am Kolben im Wesentlichen im Bereich des im Druckraum befindlichen Gassammelabschnitts befinden, einen Ausgleichskanal zwischen dem Druckraum und dem Nachlaufkanal bereit, so das damit die Vorzüge des mit der EP 1 602 543 B1 bekannt gewordenen Druckmittelzylinders zur besseren Entlüftung genutzt werden können.

Mit dem erfindungsgemäßen Hydraulikzylinder können insgesamt Gasansammlungen besonders zuverlässig aus dem Druckraum abgeführt, eine schnelle und sichere Fluidbefüllung durchgeführt und gleichzeitig ein vergleichsweise kurzer Betätigungstotweg realisiert werden.

Vorteilhafte Ausgestaltungen und Weiterbildungen der Erfindung sind mit den Merkmalen der Unteransprüche angegeben.

Gemäß Anspruch 2 sind die zweiten Nachlaufmittel am Kolben bevorzugt außerhalb des Bereichs des Gassammelabschnitts ausgeführt, wodurch der entsprechende Umfangsabschnitt am Kolben der Ausbildung der ersten Nachlaufmittel vorbehalten bleibt.

Mit besonderem Vorteil sind die ersten und/oder zweiten Nachlaufmittel als offene Nachlaufnuten am Kolben ausgeführt sind, dadurch kann das an der höchsten Stelle des Druckraumes angesammelte Gas unmittelbar, d.h. im Wesentlichen ohne Umwege, durch die Nut bzw. Nuten abgeführt werden.

Besonders effektiv lässt sich eine Entlüftung erreichen, wenn gemäß Anspruch 4 lediglich eine einzige Nachlaufnut als erstes Ausgleichsmittel am Kolben ausgeführt ist. Auf diese Weise wird das bei einer Kolbenbewegung verdrängte Fluid nach dem Verschluss der zweiten Ausgleichsmittel vollständig über eine einzige Nut abgeführt, wobei Gasrückstände beim Ausströmen besonders effektiv von dem Fluidstrom mitgerissen werden.

Eine weitere vorteilhafte Verbesserung der Entlüftung kann nach Anspruch 5 erzielt werden, indem der Gassammelabschnitt durch eine sich im Gehäuse längs des Druckraums erstreckende Entlüftungsnut gebildet und dadurch auf einen vorgegebenen Abschnitt des Druckraumes eingeengt wird. Bei einem in einem Kraftfahrzeug angeordneten Hydraulikzylinder können sich aufgrund betriebsbedingter Vibrationen die Gase selbstständig an die in Gebrauchslage des Zylinders geodätisch am höchsten innerhalb des Druckraumes angeordneten Bereich bewegen und sich dort konzentrieren.

Wenn, wie dieses Anspruch 6 vorsieht, der Boden der Entlüftungsnut gegenüber einer Horizontalen der vorgesehenen Einbaulage des Gehäuses zu dem Nachlaufkanal hin ansteigend gestaltet ist, stauen sich die Gasblasen in einem Axialbereich unmittelbar an der Primärdichtung an, wodurch der Austritt über die ersten Nachlaufmittel nochmals erheblich erleichtert wird.

Eine Weiterbildung der Erfindung gemäß Anspruch 7 sieht vor, die Primärdichtung als Ringlippendichtung auszuführen, wobei deren offene Ringnut gegenüber der Entlüftungsnut mit einem Deckelement abgedeckt ist. Somit wird ein Übertritt und eine Ansammlung von Gasblasen in die bzw. der Ringnut vermieden und gleichzeitig sichergestellt, dass Gas ausschließlich über die ersten Nachlaufmittel aus dem Druckraum ausgeleitet wird.

Für ein schnelles Ableiten von Gas ist es gemäß Anspruch 8 zweckmäßig, die ersten Nachlaufmittel auf einer im Wesentlichen gleichen Umfangslage wie den Nachlaufkanal anzuordnen.

In einer Weiterbildung der Erfindung ist nach Anspruch 9 vorgesehen, den Ausgleichskanal innerhalb eines räumlich begrenzten Nachlaufbereichs auszubilden und dazu auf der dem Druckraum abgewandten Seite eine zwischen dem Gehäuse oder dem Führungsrohr und dem Kolben wirkende Sekundärdichtung einzusetzen.

Die Erfindung wird nachfolgend unter Bezugnahme auf die beigefügte Figur anhand eines bevorzugten Ausführungsbeispiels an einem Geberzylinder für eine Kraftfahrzeugkupplung erläutert. Es zeigen:

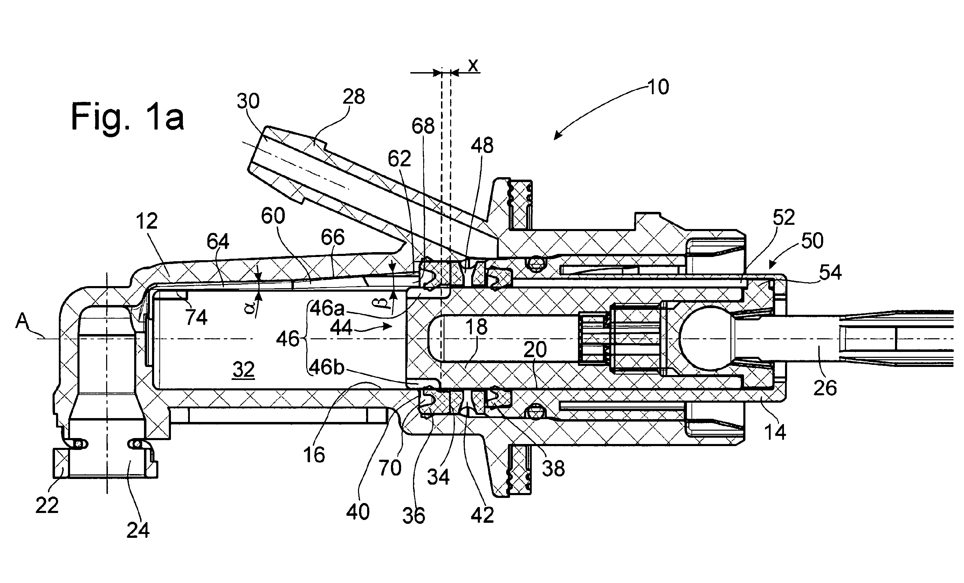

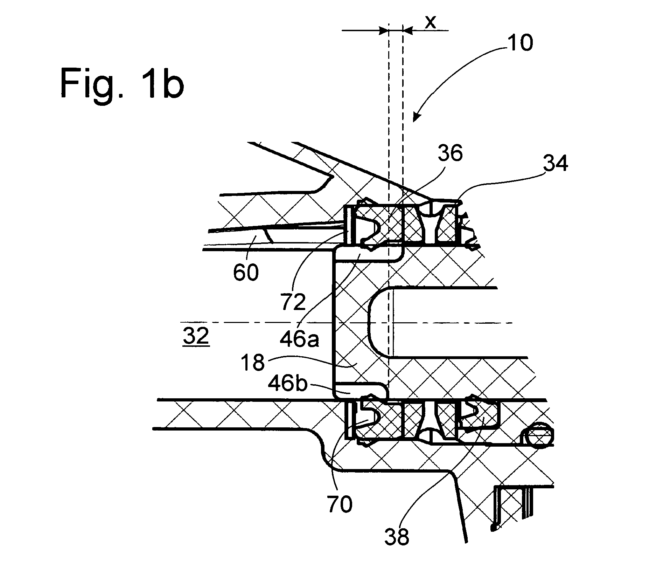

- Fig. 1 a: eine Axialschnittdarstellung eines Hydraulikzylinders mit einer Nachlaufein- richtung,
- Fig. 1 b: ein Ausschnitt des Hydraulikzylinders der Fig. 1a mit einer im Bereich der Primärdichtung angeordneten Ringscheibe,

Die Fig. 1 a zeigt eine Axialschnittdarstellung eines erfindungsgemäßen Hydraulikzylinders 10 mit einer Nachlaufeinrichtung, welcher als Geberzylinder für eine hydraulische Betätigungseinrichtung zur Betätigung einer Kraftfahrzeugkupplung ausgebildet ist. Der Geberzylinder 10 weist ein Kunststoff-Gehäuse 12 und eine, in einer Stufenbohrung angeordnete, fest mit dem Gehäuse 12 verbundenes Führungsrohr 14 auf, welche eine gemeinsame Laufbuchse 16 für einen in dem Zylinder 10 axial beweglichen Kolben 18 mit einer Lauffläche 20 bilden.

Das Gehäuse 12 umfasst an der Stirnseite einen Fluidanschluss 22 mit einem Fluidkanal 24, der über eine dort verbindbare Fluidleitung mit einem zeichnerisch nicht dargestellten Nehmerzylinder in Fluidverbindung steht. Der Kolben 18 des Geberzylinders 10 steht über eine schwenkbeweglich an diesem angeordnete Kolbenstange 26 mit einem nicht dargestellten Kupplungspedal in Wirkverbindung, bei dessen Betätigung sich der Kolben 26 in der Figur nach links verschiebt und über die Fluidverbindung den Nehmerzylinder und eine mit diesen verbundene Kupplungsgabel zum Ausrücken der Fahrzeugkupplung steuert.

Von der Mantelfläche des Gehäuses steht ein Nachlaufanschluss 28 ab, der mit einem darin ausgeführten Nachlaufkanal 30 mit einem nicht dargestellten Fluid-Nachlaufbehälter kommuniziert. Die Stirnseite des Kolbens 18 und die Innenwandung des Zylindergehäuses 12 definieren einen variablen Druckraum 32, welcher gegenüber dem beweglichen Kolben 18 gegen die Umgebung abgedichtet ist. Dazu sind am Gehäuse 12 zwei, durch einen Zwischenring 34 beabstandete Ringlippendichtungen 36, 38 angeordnet, die jeweils mit einer Dichtlippe am Gehäuse 12 und mit einer zweiten Dichtlippe an der Lauffläche 20 des Kolbens 18 anliegen. Die axial zwischen dem Nachlaufkanal 30 und dem Druckraum 32, an einem Gehäuseabsatz 40 anliegende erste Dichtung (Primärdichtung 36) dichtet den Druckraum 32 gegenüber einen durch den Zwischenring 34 gebildeten ringförmigen Nachlaufbereich 42 ab. Die zweite, am Ende des Führungsrohrs 14 befindliche Ringlippendichtung 38 (Sekundärdichtung) dient der dichten Abtrennung des Nachlaufbereichs 42 von der Atmosphäre. Alternativ kann die Sekundärdichtung 28 auch im Gehäuse angeordnet werden. Um ein Nachlaufen von Hydraulikflüssigkeit in und das Entweichen von Gasblasen aus dem Druckraum 32 sicherzustellen, weist der Geberzylinder 10 eine Nachlaufeinrichtung 44 auf.

Zu diesem Zweck sind an der Kolbenlauffläche 20 mit der Bezugsziffer 46 bezeichnete Nachlaufmittel vorgesehen. Wie aus der Fig. 1a ersichtlich, ist als erstes Nachlaufmittel am Kolben 18 eine Nachlaufnut 46a auf einer im Wesentlichen gleichen Umfangslage bezüglich des Gehäuses 12 wie der in den Nachlaufbereich 42 mündende Nachlaufkanal 30 und wie eine Entlüftungsnut 60 angeordnet, so dass der Ausgleichskanal 48 im Nachlaufbereich 42 möglichst kurz bemessen ist.

In der unteren Hälfte des Druckmittelzylinders 10 ist als zweites Nachlaufmittel eine von mehreren Nachlaufnuten 46b sichtbar, die sich ebenso wie die Nachlaufnut 46a am Kolben von dessen druckraumseitiger Stirnseite aus in axialer Richtung erstrecken, jedoch gegenüber dieser um einen Betrag x in Richtung des Druckraumes 32 axial versetzt sind. Die Nachlaufnuten 46a, b sind gleichmäßig am Kolbenumfang verteilt angeordnet. Zum Beispiel können bei einer Winkelbeabstandung um jeweils 45° eine Nut 46a und sieben Nuten 46 b vorgesehen sein. Die Lage beider Nachlaufnuten 46a, b ist zudem so gewählt, dass die Primärdichtung 36 in der dargestellten Endstellung des Kolbens 18 von beiden Nuten 46a, b überbrückt wird und dabei ein Ausgleichskanal 48 vom Druckraum 32 ausgehend über die Nachlaufnuten 46a, b zum Nachlaufbereich 42 und weiter zum Nachlaufkanal 30 freigegeben wird. Die Fluidverbindung zwischen dem Nachlaufbereich 42 und dem Nachlaufkanal 30 sowie dem Druckraum 32 wird durch in der Figur verdeckte Kanäle im Zwischenring 34 sichergestellt.

Zur weiteren Unterstützung der Entlüftung ist die bereits angesprochene Entlüftungsnut 60 in der oberen Wandung des Druckraums 32 angeordnet, welche einen dem Nachlaufkanal 30 nahen Abschnitt 62 und einen dem Nachlaufkanal 30 fernen Abschnitt 64 aufweist. Der dem Nachlaufkanal 30 ferne Abschnitt 64 hat einen gegenüber der Horizontalen um einen Winkel α von 1,5° zu dem Nachlaufkanal 30 hin ansteigenden Nutgrund 66. Der dem Nachlaufkanal 30 nahe Abschnitt 62 weist einen zu diesem um den Winkel β, der etwa 5° beträgt, gegenüber der Horizontalen ansteigenden Nutgrund 66 auf und erstreckt sich ungefähr über ein Drittel der Länge des Druckraums 32. Insbesondere der dem Nachlaufkanal 30 nahe Abschnitt 62 bildet innerhalb des Druckraums 32 einen Sammelabschnitt 68 für Gasblasen, welche sich unmittelbar vor der Primärdichtung 36 ansammeln und in der eingezeichneten Stellung des Kolbens 18, in der sich die Nachlaufnut 46a im Bereich der Primärdichtung 36 befindet, über die Nachlaufnut 46a und den Nachlaufkanal 30 entweichen können.

Zur Beibehaltung der gegenseitigen Drehlage der Nachlaufmittel 46, insbesondere der Nachlaufnut 46a und dem Gehäuse 12 weist der Geberzylinder 10 eine Verdrehsicherung 50 mit einer axialen Führungsnut 52 in dem Führungsrohr 14 und einer in diese eingreifende und axial von dieser geführten Nase 24 am Kolben 18 auf.

In der dargestellten ausgefahrenen Endstellung kann somit bei einem Unterdruck über alle Nachlaufnuten 46a, b Hydraulikfluid in den Druckraum 32 nachlaufen. Bei einer Bewegung des Kolbens 18 in die den Druckraum 32 verkleinernde Richtung werden zunächst die Nachlaufnuten 46b aus dem Bereich der Primärdichtung 36 heraus bewegt, wobei einzig die Nachlaufnut 46a noch einen Durchgang zum Druckraum 32 bietet.

Bei weiterer Bewegung des Kolbens 18 wird beim Vorhandensein einer Gasansammlung in der Entlüftungsnut 60 oder wenn diese nicht ausgebildet ist im geodätisch oberen Volumenbereich des Druckraumes 32 Fluid verdrängt, was dort einen ansteigenden Fluidpegel zur Folge hat, da das Fluid über die ggf. außerhalb des Gassammelabschnittes 68 angeordneten Nachlaufnuten 46a nur ungenügend schnell aus dem Druckraum 32 entweichen kann. In Folge werden die im Gassammelabschnitt 68 vorhandenen Gase zunächst komprimiert und nach dem Verschließen bzw. vollständigen Übergang der Nuten 46b in den Druckraum über die zu diesem unmittelbar benachbarten, d.h. in diesem Zustand in direkter Strömungsverbindung stehenden Nachlaufmitteln 46a mit dem überschüssigen, verdrängten Fluid aus dem Druckraum 32 geschoben bzw. herausgepresst.

Wenn die Nachlaufmittel 46a ebenfalls vollständig in den Druckraum übergegangen sind, legt sich die Primärdichtung 36 vollständig an die Kolbenlauffläche 20 an, wodurch die Verbindung zwischen dem Druckraum 32 und dem Nachlaufkanal 30 ganz unterbrochen ist.

Anstelle offener Nuten 46a, b können die Nachlaufmittel 46 auch wahlweise als Querbohrungen oder ähnliches ausgeführt werden, welche z.B. mit einer zentralen druckraumseitigen Kolbenausnehmung mit dem Druckraum verbunden sind.

Zur Erzielung einer möglichst vollständigen Entgasung des Druckraumes 32 ist es von besonderer Bedeutung, die Strömungsgeschwindigkeit des Fluids in der oder den Nachlaufnuten 46a möglichst hoch einzustellen, was bei einem vorgegebenen Kolbenquerschnitt durch eine geeignete Wahl des Nutquerschnitts in Verbindung mit der Nutanzahl einfach erfolgen kann. Vorteilhafterweise entspricht der Querschnitt der Nachlaufmittel 46a mindestens dem Querschnitt der Entlüftungsnut 60 im Bereich der Primärdichtung 36. Damit wird bei relativ großen Gasansammlungen eine Aufstauung an dem Ausgleichskanal 48 bei einem Entlüftungsvorgang vermieden.

Zur Vermeidung eines Übertritts von Restgas aus dem Druckraum 32 in die von den Dichtlippen der Primärdichtung 36 aufgespannte Ringnut 70 kann ein zusätzliches Deckelement 72, bspw. eine Ringscheibe 72 zur Abdeckung der Ringnut 70 eingebracht werden, wie dieses in dem Ausschnitt der Fig. 1b gezeigt ist. Die Ringscheibe 72 wird dazu zwischen der Primärdichtung 36 und dem Absatz 40 zentriert von dem Gehäuse 12 aufgenommen, wobei deren Innendurchmesser so bemessen ist, dass die Lauffläche 20 des Kolbens 18 berührungsfrei vorbeigleiten kann.

Der Hydraulikzylinder 10 ist zum Einbau in einer horizontalen Lage vorgesehen. Hierbei entspricht die Mittelachse A des Hydraulikzylinders 10 der Horizontalen. Der Hydraulikzylinder 10 kann auch mit seinem Anschluss 22 für die Druckleitung nach oben hin um einen gegenüber dem Winkel α kleineren oder gleich großen Winkel zur Horizontalen geneigt angeordnet werden.

Alternativ zu der Ausbildung einer einzigen Nachlaufnut 46a als erstes Nachlaufmittel kann der Kolben 18 auch mehrere derartiger Nuten 46a aufweisen. Die eine oder mehreren Nachlaufnuten 46a sind vorzugsweise am Kolben 18 am geodätisch höchsten Bereich und axial benachbart zum Gassammelabschnitt 68 ausgebildet. Bei der in der Fig. 1 a dargestellten horizontalen Lage sind die Nachlaufnuten 46a in der oberen Halbebene des Kolbens 18, und besonders bevorzugt nahe zum Nachlaufkanal 30 und günstigerweise ebenso im Bereich der Entlüftungsnut 60 positioniert.

Zusätzlich können auch eine oder mehrere Nachlaufnuten 46a außerhalb des mit dem Gassammelabschnitt 68 zusammenwirkenden Kolbenbereichs ausgebildet werden. Jedoch sind die Nachlaufnuten 46a insgesamt so anzuordnen und zu dimensionieren, dass sich bei einer Entlüftung die beschriebene Wirkung einstellen kann.

Am stirnseitigen Ende des Druckraums 32 kann zusätzlich ein kurzer, sich axial erstreckender Steg 74 ausgebildet sein, der bei Erreichen der eingeschobenen Endposition des Kolbens 18 dort formschlüssig in die Nachlaufnut 46 eingreift und sich in der Nachlaufnut aufstauende, jedoch nach dem Passieren der Primärdichtung 36 nicht mehr über diese abführbare Gasansammlungen aus der Nut 46a verdrängt, worauf sich diese in die Entlüftungsnut 60 ausweichen und in dieser in Richtung der Primärdichtung 36 nach oben ansteigen können, um bei einem nächsten Entlüftungsvorgang aus dem Druckraum 32 zu entweichen.

### Bezugszeichenliste

- 10: Hydraulikzylinder
- 12: Zylindergehäuse
- 14: Führungsrohr
- 16: Laufbuchse
- 18: Kolben
- 20: Lauffläche
- 22: Fluidanschluss
- 24: Fluidkanal
- 26: Kolbenstange
- 28: Nachlaufanschluss
- 30: Nachlaufkanal
- 32: Druckraum
- 34: Zwischenring
- 36: Primärdichtung
- 38: Sekundärdichtung
- 40: Gehäuseabsatz
- 42: Nachlaufbereich
- 44: Nachlaufeinrichtung
- 46: Nachlaufmittel
- 46a: erste Nachlaufmittel
- 46b: zweite Nachlaufmittel
- 48: Ausgleichskanal
- 50: Verdrehsicherung
- 52: Führungsnut
- 54: Nase
- 60: Entlüftungsnut
- 62: naher Abschnitt
- 64: ferner Abschnitt
- 66: Nutgrund
- 68: Gassammelabschnitt
- 70: Ringnut
- 72: Ringscheibe
- 74: Axialsteg

## Patentansprüche

1. Hydraulikzylinder (10) für ein hydraulisches System, insbesondere Geberzylinder für eine hydraulische Betätigungseinrichtung zum Betätigen einer Fahrzeugkupplung, umfassend:
- ein Gehäuse (12) mit einem Fluidanschluss (22) zur Verbindung mit dem hydraulischen System und mit einem Nachlaufanschluss (28), der über einen Nachlaufkanal (30) mit einem Fluid-Nachlaufbehälter verbunden oder verbindbar ist,
- einen in dem Gehäuse (12) längsverschieblich geführten Kolben (18), der einen variablen Druckraum (32) begrenzt,
- eine im Gehäuse (12) angeordnete Primärdichtung (36), die den Druckraum (32) gegenüber dem Atmosphärendruck abdichtet, und
- am Kolben (18) befindliche Nachlaufmittel (46) zur Herstellung eines Ausgleichskanals (48) zwischen dem Druckraum (32) und dem Nachlaufkanal (30) in einer ausgefahrenen Endstellung des Kolbens (18), in der die Primärdichtung (36) überbrückt wird,
**dadurch gekennzeichnet,**
**dass** erste Nachlaufmittel (46a) am Kolben (18) im Wesentlichen im Bereich eines im Druckraum (32) befindlichen Gassammelabschnitts (68) ausgebildet und drehfest zu diesem angeordnet sind und dass zweite Nachlaufmittel (46b) vorgesehen sind, welche gegenüber den ersten Nachlaufmitteln (46a) axial in Richtung des Druckraums (32) versetzt angeordnet sind.

2. Hydraulikzylinder nach Anspruch 1,
**dadurch gekennzeichnet,**
**dass** die zweiten Nachlaufmittel (46b) am Kolben (18) außerhalb des Bereichs des Gassammelabschnitts (68) ausgeführt sind.

3. Hydraulikzylinder nach Anspruch 1 oder 2,
**dadurch gekennzeichnet,**
**dass** die Nachlaufmittel (46a,b) als offene Nachlaufnuten am Kolben (18) ausgeführt sind.

4. Hydraulikzylinder nach einem der vorhergehenden Ansprüche,
**dadurch gekennzeichnet,**
**dass** die ersten Nachlaufmittel (46a) als eine einzige Nachlaufnut ausgeführt sind.

5. Hydraulikzylinder nach einem der vorhergehenden Ansprüche,
**dadurch gekennzeichnet,**
**dass** der Gassammelabschnitt (68) durch eine sich im Gehäuse (12) längs des Druckraums (32) erstreckende Entlüftungsnut (60) gebildet wird.

6. Hydraulikzylinder nach Anspruch 5,
**dadurch gekennzeichnet,**
**dass** der Grund (66) der Entlüftungsnut (60) gegenüber einer Horizontalen der vorgesehenen Einbaulage des Gehäuses (12) zu dem Nachlaufkanal (30) hin ansteigend gestaltet ist.

7. Hydraulikzylinder nach einem der vorhergehenden Ansprüche,
**dadurch gekennzeichnet,**
**dass** die Primärdichtung (36) als Ringlippendichtung ausgeführt ist, deren Ringnut (70) gegenüber der Entlüftungsnut (60) mit einem Deckelement (72) abgedeckt ist.

8. Hydraulikzylinder nach einem der vorhergehenden Ansprüche,
**dadurch gekennzeichnet,**
**dass** die ersten Nachlaufmittel (46a) auf einer im Wesentlichen gleichen Umfangslage wie der Nachlaufkanal (30) angeordnet sind.

9. Hydraulikzylinder nach einem der vorhergehenden Ansprüche,
**dadurch gekennzeichnet,**
**dass** der Ausgleichskanal (48) innerhalb eines Nachlaufbereichs (42) ausgebildet ist, welcher auf der dem Druckraum (32) abgewandten Seite von einer zwischen dem Gehäuse (12) oder einem mit diesem verbundenen Führungsrohr (14) und dem Kolben (18) angeordneten Sekundärdichtung (38) begrenzt wird.

## Claims

1. Hydraulic cylinder (10) for a hydraulic system, in particular master cylinder for a hydraulic actuating device for actuating a vehicle clutch, comprising:
- a housing (12) having a fluid connection (22) for connection to the hydraulic system, and having an overrun connection (28) which is connected or can be connected via an overrun channel (30) to a fluid overrun container,
- a piston (18) which is guided longitudinally displaceably in the housing (12) and delimits a variable pressure chamber (32),
- a primary seal (36) which is arranged in the housing (12) and seals the pressure chamber (32) with respect to atmospheric pressure, and
- overrun means (46) which are situated on the piston (18) for producing an equalization channel (48) between the pressure chamber (32) and the overrun channel (30) in an extended end position of the piston (18), in which end position the primary seal (36) is bridged,
**characterized in that** first overrun means (46a) on the piston (18) are configured substantially in the region of a gas collecting section (68) which is situated in the pressure chamber (32) and are arranged in a rotationally fixed manner with respect to the said gas collecting section (68), and **in that** second overrun means (46b) are provided which are arranged in an axially offset manner in direction of the pressure chamber (32) with respect to the first overrun means (46a) .

2. Hydraulic cylinder according to Claim 1, **characterized in that** the second overrun means (46b) are configured as the piston (18) outside of the region of the gas collecting section (68).

3. Hydraulic cylinder according to Claim 1 or 2, **characterized in that** the overrun means (46a, b) are configured as open overrun grooves on the piston (18).

4. Hydraulic cylinder according to one of the preceding claims, **characterized in that** the first overrun means (46a) are configured as a single overrun groove.

5. Hydraulic cylinder according to one of the preceding claims, **characterized in that** the gas collecting section (68) is formed by a venting groove (60) which extends in the housing (12) along the pressure chamber (32).

6. Hydraulic cylinder according to Claim 5, **characterized in that** the bottom (66) of the venting groove (60) is designed so as to rise towards the overrun channel (30) with respect to a horizontal of the provided installation position of the housing (12).

7. Hydraulic cylinder according to one of the preceding claims, **characterized in that** the primary seal (36) is configured as an annular lip seal, the annular groove (70) of which is covered with a cover element (72) with respect to the venting groove (60).

8. Hydraulic cylinder according to one of the preceding claims, **characterized in that** the first overrun means (46a) are arranged on a substantially identical circumferential position to the overrun channel (30).

9. Hydraulic cylinder according to one of the preceding claims, **characterized in that** the equalization channel (48) is configured within an overrun region (42) which is delimited on the side which faces away from the pressure chamber (32) by a secondary seal (38) which is arranged between the piston (18) and the housing (12) or a guide pipe (14) which is connected to the said housing (12).

## Revendications

1. Cylindre hydraulique (10) pour un système hydraulique, en particulier maître-cylindre pour un dispositif d'actionnement hydraulique pour l'actionnement d'un embrayage de véhicule, comprenant :
- un carter (12) avec un raccord de fluide (22) pour la connexion au système hydraulique et avec un raccord d'alimentation (28), qui est connecté ou peut être connecté par le biais d'un canal d'alimentation (30) à un récipient d'alimentation en fluide,
- un piston (18) guidé de manière déplaçable longitudinalement dans le carter (12), qui limite un espace de pression variable (32),
- une garniture d'étanchéité primaire (36) disposée dans le carter (12), qui étanchéifie l'espace de pression (32) par rapport à la pression atmosphérique, et
- un moyen d'alimentation (46) situé au niveau du piston (18), pour créer un canal de compensation (48) entre l'espace de pression (32) et le canal d'alimentation (30) dans une position d'extrémité sortie du piston (18), dans laquelle la garniture d'étanchéité primaire (36) est surmontée,
**caractérisé en ce que**
des premiers moyens d'alimentation (46a) sont réalisés sur le piston (18) essentiellement dans la région d'une portion de collecte de gaz (68) se trouvant dans l'espace de pression (32), et sont disposés de manière fixée en rotation par rapport à cette portion, et **en ce que** des deuxièmes moyens d'alimentation (46b) sont prévus, lesquels sont disposés de manière décalée par rapport aux premiers moyens d'alimentation (46a) axialement dans la direction de l'espace de pression (32).

2. Cylindre hydraulique selon la revendication 1,
**caractérisé en ce que**
les deuxièmes moyens d'alimentation (46b) sur le piston (18) sont réalisés à l'extérieur de la région de la portion de collecte de gaz (68).

3. Cylindre hydraulique selon la revendication 1 ou 2,
**caractérisé en ce que**
les moyens d'alimentation (46a,b) sont réalisés sous forme de rainures d'alimentation ouvertes sur le piston (18).

4. Cylindre hydraulique selon l'une quelconque des revendications précédentes,
**caractérisé en ce que**
les premiers moyens d'alimentation (46a) sont réalisés sous forme de rainure d'alimentation unique.

5. Cylindre hydraulique selon l'une quelconque des revendications précédentes,
**caractérisé en ce que**
la portion de collecte de gaz (68) est formée par une rainure de désaérage (60) s'étendant dans le carter (12) le long de l'espace de pression (32).

6. Cylindre hydraulique selon la revendication 5,
**caractérisé en ce que**
la base (66) de la rainure de désaérage (60) est configurée de manière à monter par rapport à une horizontale de la position d'installation prévue du carter (12) en direction du canal d'alimentation (30).

7. Cylindre hydraulique selon l'une quelconque des revendications précédentes,
**caractérisé en ce que**
la garniture d'étanchéité primaire (36) est réalisée sous forme de garniture d'étanchéité à lèvre annulaire, dont la rainure annulaire (70) est recouverte par rapport à la rainure de désaérage (60) par un élément de recouvrement (72).

8. Cylindre hydraulique selon l'une quelconque des revendications précédentes,
**caractérisé en ce que**
les premiers moyens d'alimentation (46a) sont disposés dans une position périphérique essentiellement identique au canal d'alimentation (30).

9. Cylindre hydraulique selon l'une quelconque des revendications précédentes,
**caractérisé en ce que**
le canal de compensation (48) est réalisé à l'intérieur d'une région d'alimentation (42) qui est limitée du côté opposé à l'espace de pression (32) par une garniture d'étanchéité secondaire (38) disposée entre le carter (12) ou un tube de guidage (14) connecté à celui-ci, et le piston (18).
